(19)

Europäisches Patentamt

European Patent Office

Office européen des brevets

(11) **EP 3 179 425 A1**

(12) **EUROPEAN PATENT APPLICATION**

(43) Date of publication:
**14.06.2017 Bulletin 2017/24**

(51) Int Cl.:
***G06Q 10/10*** *(2012.01)*

(21) Application number: **16159294.4**

(22) Date of filing: **09.03.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.12.2015 IN 4635MU2015**

(71) Applicant: **Tata Consultancy Services Limited Maharashtra (IN)**

(72) Inventors:
 • **SAHU, Kuleshwar**
 **411013 Pune, Maharashtra (IN)**

 • **PALSHIKAR, Girish**
 **411013 Pune, Maharashtra (IN)**
 • **SRIVASTAVA, Rajiv**
 **411013 Pune, Maharashtra (IN)**
 • **JAIN, Ankita**
 **411013 Pune, Maharashtra (IN)**
 • **GUPTA, Mohit**
 **411013 Pune, Maharashtra (IN)**

(74) Representative: **Goddar, Heinz J.**
**Boehmert & Boehmert**
**Anwaltspartnerschaft mbB**
**Patentanwälte Rechtsanwälte**
**Pettenkoferstrasse 20-22**
**80336 München (DE)**

(54) **SYSTEMS AND METHODS FOR REPLACEMENT PLANNING AND MANAGEMENT**

(57)     Systems and methods for replacement planning and management are provided. The method includes processing data specific to one or more users, identifying replacement for a predecessor in a particular position in an entity based on the data, identifying, one or more replacement patterns from replacement pattern datasets across platforms based on one or more attributes associated with the particular position. In an embodiment, one or more attributes may include at least one of records of the one or more users, one or more predecessor successor relationships specific to the particular position for a specified period. The method further includes generating one or more rules based on the identified replacement patterns and domain knowledge pertaining to the particular position, identifying successors across platforms from the one or more users based on the generated rules, and generate a list of plausible successors across platforms from the successors for replacement of the predecessor.

FIG. 3

**Description**

CROSS-REFERENCE TO RELATED APPLICATIONS AND PRIORITY

This patent application claims priority to India Patent Application 4635/MUM/2015, filed on December 8, 2015, the entirety of which is hereby incorporated by reference.

TECHNICAL FIELD

The embodiments herein generally relate to replacement planning systems, and, more particularly, to systems and methods for replacement planning and management.

BACKGROUND

Business environment seeks continuous improvement in terms of growth, profit and market capitalization. To accomplish above stated goals, each organization follows certain well defined strategic processes and these processes are executed by talent managers or human resources who are effectively governed by Human Resource Management strategies. Human Resource Management (HRM) plays vital role in the growth of organizations. HRM policy based Rotation Policy, Attrition and future endeavors lead human resource placements, structural (hierarchy) changes in terms of various positions, incumbents and new joiners affect the organizations. Human resource placements in the organizations can be in terms of repositioning and replacements which leads the HRM function of Job Position Fulfillment and Replacement Planning. Replacement Planning is one among important steps in the Succession Planning where for given employee (predecessor) associated with particular position and incumbents, an employee (successor) is identified to take the predecessor's position.

In most of the organization Replacement Planning performed by the top level HR managers manually which includes subjectivity and inadequate replacement context considerations for replacement identification for important job positions. Conventional developed systems for the employee replacement and utilizing assessed context have several challenges in identifying suitable successors. For example, identification and prediction of the successor for given position is quite challenging to be done by human, as it involves judging project contexts, culture, capabilities, availability and risks etc., which points to need of Human Resource Management System to assist Human Resource Manager to make reliable decision by considering relevant contextual variables.

Existing approaches consider restricted organizational hierarchies, for a given predecessor, where employees are ranked just one level below in the hierarchies based on their past performance, talent and competencies, and do not account two or more levels below the incumbent to be a possible successors. For modern organizations, these hierarchies are being replaced by flat structures, in such a scenario, existing approaches may not suffice as they fail to also consider other operational parameters such as project requirements and the like. Moreover, existing approaches focus on workforce management systems that are designed to handle separation event, in terms of attrition, voluntarily and involuntarily retirements, does not consider replacement planning to retain benefits and growth.

SUMMARY

The following presents a simplified summary of some embodiments of the disclosure in order to provide a basic understanding of the embodiments. This summary is not an extensive overview of the embodiments. It is not intended to identify key/critical elements of the embodiments or to delineate the scope of the embodiments. Its sole purpose is to present some embodiments in a simplified form as a prelude to the more detailed description that is presented below. In view of the foregoing, an embodiment herein provides systems and methods for replacement planning and management across platforms in entities.

In one aspect, a processor implemented system is provided. The processor implemented system includes a memory storing instructions; a communication interface; and a hardware processor coupled to the memory, wherein the hardware processor is configured by the instructions to: process data specific to one or more users, identify at least one replacement for a predecessor in a particular position in an entity based on the data, identify, for the particular position, one or more replacement patterns from one or more replacement pattern datasets across platforms, wherein the one or more replacement patterns are identified across platforms based on one or more attributes associated with the particular position. In an embodiment, one or more attributes may include at least one of records of the one or more users, one or more predecessor successor relationships specific to the particular position for a specified period. The hardware processor is further configured by the instructions to generate one or more rules based on the one or more identified replacement patterns and domain knowledge pertaining to the particular position, identify one or more successors across platforms from the one or more users based on the one or more generated rules, and generate a list of one or more plausible successors across platforms from the one or more successors for replacement of the predecessor. The identification of at least one replacement for a predecessor in a particular position in an entity based on the data includes identifying one or more predecessors for which at least one successor is to be planned.

The hardware processor is further configured by the instructions to select at least one successor as potential replacement for the predecessor from the one or more plausible successors identified across platforms based on a similarity score computed for each of the one or more plausible successors. In an embodiment, the similarity score is computed using at least one of an unsupervised technique and a supervised technique, wherein the unsupervised technique comprises at least one of Euclidean (E) distance measure technique, Mahalanobis (M) distance measure technique and Hamming (H) distance measure technique, a weighted H-E technique, and a weighted H-M technique, and wherein the supervised technique comprises at least one of a metric learning based technique, and a classification based ranking technique.

The hardware processor is further configured by the instructions to generate one or more graphical representations comprising at least one of (i) a position of one or more plausible successors from the predecessor based on the similarity score, and (ii) a comparison of one or more attribute patterns of the predecessor, one or more predicted successors, the one or more plausible successors from the one or more predicted successor, and an actual successor from the one or more plausible successors. The hardware processor is further configured by the instructions to: process a selection of one or more preferences in the one or more graphical representations, wherein the one or more preferences comprises at least one of a project type, and an operational unit in the entity, and generate a list of one or more potential successors from the one or more plausible successors based on the one or more preferences, wherein the list of one or more potential successors comprises the actual successor.

The hardware processor is further configured by the instructions to validate the one or more plausible successors against one or more decisions made by a user for identifying an actual successor for the predecessor. The hardware processor is further configured by the instructions to identify one or more subsequent plausible successors based on the one or more replacement patterns and the one or more decisions made by the user.

In another aspect, a processor implemented method is provided. The method includes processing data specific to one or more users; identifying at least one replacement for a predecessor in a particular position in an entity based on the data; identifying, for the particular position, one or more replacement patterns from one or more replacement pattern datasets across platforms, wherein the one or more replacement patterns are identified across platforms based on one or more attributes associated with the particular position; generating one or more rules based on the one or more identified replacement patterns and domain knowledge pertaining to the particular position; identifying one or more successors across platforms from the one or more users based on the one or more generated rules; and generating a list of one or more plausible successors across platforms from the one or more successors for replacement of the predecessor.

The processor implemented method may further include selecting at least one successor as potential replacement for the predecessor from the one or more plausible successors identified across platforms, wherein the at least one successor is selected as potential replacement for the predecessor from the one or more plausible successors based on a similarity score computed for each of the one or more plausible successors. In an embodiment, the similarity score may be computed using at least one of an unsupervised technique and a supervised technique, wherein the unsupervised technique comprises at least one of Euclidean (E) distance measure technique, Mahalanobis (M) distance measure technique and Hamming (H) distance measure technique, a weighted H-E technique, and a weighted H-M technique, and wherein the supervised technique comprises at least one of a metric learning based technique, and a classification based ranking technique.

The method may further include generating one or more graphical representations indicative of at least one of (i) a position of one or more plausible successors from the predecessor based on the similarity score, and (ii) a comparison of one or more attribute patterns of the predecessor, one or more predicted successors, the one or more plausible successors from the one or more predicted successor, and an actual successor from the one or more plausible successors.

The processor implemented method may further include processing a selection of one or more preferences in the one or more graphical representations, wherein the one or more preferences comprises at least one of a project type, and an operational unit in the entity; and generating a list of one or more potential successors from the one or more plausible successors based on the one or more preferences, wherein the list of one or more potential successors comprises the actual successor.

In yet another aspect, one or more non-transitory machine readable information storage mediums comprising one or more instructions is provided. The one or more instructions which when executed by one or more hardware processors causes processing data specific to one or more users; identifying at least one replacement for a predecessor in a particular position in an entity based on the data; identifying, for the particular position, one or more replacement patterns from one or more replacement pattern datasets across platforms, wherein the one or more replacement patterns are identified across platforms based on one or more attributes associated with the particular position; generating one or more rules based on the one or more identified replacement patterns and domain knowledge pertaining to the particular position; identifying one or more successors across platforms from the one or more users based on the one or more generated rules; and generating a list of one or more plausible successors across platforms from the one or more successors for replacement of the predecessor.

The one or more instructions may further cause selecting at least one successor as potential replacement for the predecessor from the one or more plausible successors identified across platforms, wherein the at least one successor is selected as potential replacement for the predecessor from the one or more plausible successors based on a similarity score computed for each of the one or more plausible successors. In an embodiment, the similarity score may be computed using at least one of an unsupervised technique and a supervised technique, wherein the unsupervised technique comprises at least one of Euclidean (E) distance measure technique, Mahalanobis (M) distance measure technique and Hamming (H) distance measure technique, a weighted H-E technique, and a weighted H-M technique, and wherein the supervised technique comprises at least one of a metric learning based technique, and a classification based ranking technique.

The one or more instructions may further cause generating one or more graphical representations indicative of at least one of (i) a position of one or more plausible successors from the predecessor based on the similarity score, and (ii) a comparison of one or more attribute patterns of the predecessor, one or more predicted successors, the one or more plausible successors from the one or more predicted successor, and an actual successor from the one or more plausible successors. The one or more instructions may further cause processing a selection of one or more preferences in the one or more graphical representations, wherein the one or more preferences comprises at least one of a project type, and an operational unit in the entity; and generating a list of one or more potential successors from the one or more plausible successors based on the one or more preferences, wherein the list of one or more potential successors comprises the actual successor.

It should be appreciated by those skilled in the art that any block diagram herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computing device or processor, whether or not such computing device or processor is explicitly shown.

BRIEF DESCRIPTION OF THE DRAWINGS

The embodiments herein will be better understood from the following detailed description with reference to the drawings, in which:

FIG. 1 is a block diagram of a replacement planning and management (RPM) system according to an embodiment of the present disclosure;

FIG. 2A illustrates a graphical representation that depicts a position of one or more plausible successors from a predecessor based on a similarity score according to an embodiment of the present disclosure;

FIG. 2B illustrates a graphical representation that depicts a comparison of one or more attribute patterns of the predecessor, one or more predicted successors, the one or more plausible successors from the one or more predicted successors, and an actual successor from the one or more plausible successors according to an embodiment of the present disclosure;

FIG. 3 is a flow diagram illustrating a processor implemented method for generating a list of plausible successors using the RPM system of FIG. 1 according to an embodiment of the present disclosure; and

FIGS. 4A-4C are flow charts illustrating a replacement planning technique implemented in the RPM system of FIG. 1 according to an embodiment of the present disclosure.

DETAILED DESCRIPTION OF EMBODIMENTS

The embodiments herein and the various features and advantageous details thereof are explained more fully with reference to the non-limiting embodiments that are illustrated in the accompanying drawings and detailed in the following description. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present disclosure, the preferred, systems and methods are now described.

Some embodiments of this disclosure, illustrating all its features, will now be discussed in detail. The disclosed embodiments are merely exemplary of the disclosure, which may be embodied in various forms.

Before setting forth the detailed explanation, it is noted that all of the discussion below, regardless of the particular implementation being described, is exemplary in nature, rather than limiting.

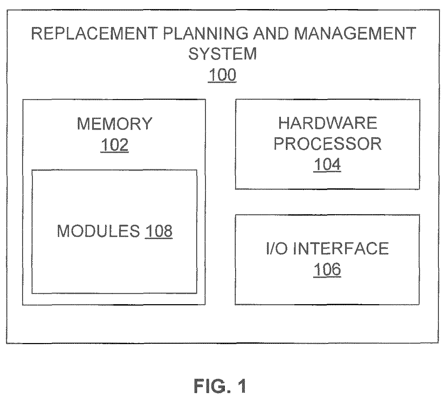

Referring now to the drawings, and more particularly to FIG. 1 through 4C, where similar reference characters denote corresponding features consistently throughout the figures, there are shown preferred embodiments and these embodiments are described in the context of the following exemplary system and/or method.

FIG. 1 is a block diagram of a replacement planning and management (RPM) system 100 according to an embodiment of the present disclosure. The RPM system 100 includes a memory 102, a hardware processor 104, and an input/output (I/O) interface 106. The memory 102 further includes one or more modules 108 (or module(s) 108). The memory 102, the hardware processor 104, the input/output (I/O) interface 106, and/or the modules 108 may be coupled by a system bus or a similar mechanism.

The memory 102, may store instructions, any number of pieces of information, and data, used by a computer system, for example the RPM system 100 to implement the functions (or embodiments) of the present disclosure. The memory 102 may include for example, volatile memory and/or non-volatile memory. Examples of volatile memory may include, but are not limited to volatile random access memory (RAM). The non-volatile memory may additionally or alternatively comprise an electrically erasable programmable read only memory (EEPROM), flash memory, hard drive, or the like. Some examples of the volatile memory includes, but are not limited to, random access memory, dynamic random access memory, static random access memory, and the like. Some example of the non-volatile memory includes, but are not limited to, hard disks, magnetic tapes, optical disks, programmable read only memory, erasable programmable read only memory, electrically erasable programmable read only memory, flash memory, and the like. The memory 102 may be configured to store information, data, applications, instructions or the like for enabling the RPM system 100 to carry out various functions in accordance with various example embodiments.

Additionally or alternatively, the memory 102 may be configured to store instructions which when executed by the hardware processor 104 causes the RPM system 100 to behave in a manner as described in various embodiments (e.g., identifying replacements for predecessors, identifying one or more replacement patterns, generating one or more rules based on the one or more identified replacement patterns and domain knowledge pertaining to the particular position, identifying one or more successors across platforms, and thereby generating a list of one or more plausible successors across platforms). The memory 102 stores information for example, information related to one or more one or more users in an entity (e.g., an organization), one or more replacement patters across platforms, and the like.

The hardware processor 104 may be implemented as one or more microprocessors, microcomputers, microcontrollers, digital signal processors, central processing units, state machines, logic circuitries, and/or any devices that manipulate signals based on operational instructions. Further, the hardware processor 104 may comprise a multi-core architecture. Among other capabilities, the hardware processor 104 is configured to fetch and execute computer-readable instructions or modules stored in the memory 102. The hardware processor 104 may include circuitry implementing, among others, audio and logic functions associated with the communication. For example, the hardware processor 104 may include, but are not limited to, one or more digital signal processors (DSPs), one or more microprocessor, one or more special-purpose computer chips, one or more field-programmable gate arrays (FPGAs), one or more application-specifc integrated circuits (ASICs), one or more computer(s), various analog to digital converters, digital to analog converters, and/or other support circuits.

The hardware processor 104 thus may also include the functionality to encode messages and/or data or information. The hardware processor 104 may include, among other things, a clock, an arithmetic logic unit (ALU) and logic gates configured to support operation of the hardware processor 104. Further, the hardware processor 104 may include functionality to execute one or more software programs, which may be stored in the memory 102 or otherwise accessible to the hardware processor 104.

The hardware processor 104 is configured by the instructions stored in the memory 102. The hardware processor 104 when configured by the instructions to data specific to one or more users, and identify one or more replacements for one or more predecessors based on the data wherein each of the one or more predecessors being in a particular position in an entity. The one or more users comprises, but are not limited to one or more employees in the entity (e.g., company, organization, and the like). The memory 102 stores replacement relationship data in the form of a tuple, for example, <predecessor, successor, date of replacement, role, previous project, etc.>. The hardware processor 104 further maps employees past record available in the memory 102 (or records obtained from an external data source) on date of replacement for the one or more predecessors and successor employees. Below Table 1 depicts the schema used to store the replacement data.

Table 1

| Replacement Mapping tuple | Demographic | Project attributes (current and previous) | Performance | Competencies | Experiences |
|---|---|---|---|---|---|
| predecessor identifier, successor identifier, date of replacement, role name, project, account, business unit | location, role name, designation, project, account, business unit | technology, platform, application area, project nature, complexity, budget, | annual appraisal rating, awards, recognitions | #competencies, #training, # courses, #proficiency levels, #certifications, primary, secondary competency | organization experience leadership experience #projects #project as leader #previous organizations experiences |

The hardware processor 104 is further configured by the instructions to identify for the particular position, one or more replacement patterns from one or more replacement pattern datasets across platforms. The one or more replacement patterns are identified across platforms are based on one or more attributes associated with the particular position. The one or more attributes comprises at least one of records of the one or more users, one or more predecessor successor relationships specific to the particular position for a specified period. For example, the hardware processor 104 look ups the replacement data for given target role and identifies important patterns used in the replacements by a user (e.g., a Human Resource (HR) management) for example, "90% replacements are made within same project type". The hardware processor 104 further queries for domain knowledge based list of replacement patterns to check the coverage of these patterns in replacement data. These replacement patterns are based on demographic attributes and project attributes, depicted in the below Table 2:

Table 2

| Description |
|---|
| same IOU |
| same project nature |
| same application area |
| same project type |
| same project platform |
| same account |
| grade level within one |
| same location |
| same role name |
| same project |
| age within 4 |

The hardware processor 104 is further configured by the instructions to generate one or more rules (e.g., one or more business rules) based on the one or more identified replacement patterns and domain knowledge pertaining to the particular position. In other words, identified replacements patterns are combined with domain knowledge to form the one or more business rules. Below is an illustrative Table 3 that depicts one or more generated rules:

Table 3

| Description |
|---|
| Same project type AND Same project_nature AND same ISU AND \| grade difference\| <= 1 AND same account |

(continued)

| Description |
|---|
| Same project_type AND Same project_nature AND same ISU AND \|grade difference\| <= 1 AND different account |
| Same project_type AND Same project_nature AND same ISU AND \| total_exp differencel <= 4 AND same account |
| Same project_type AND Same project nature AND same ISU AND \| total_exp difference\| <= 4 AND different account |
| Same project_type AND Same application_area AND same ISU AND \| grade difference\| <= 1 AND same account |
| Same project_type AND Same application_area AND same ISU AND \| grade difference\| <= 1 AND different account |
| Same project_type AND Same technology_platform AND same ISU AND \| grade difference\| <= 1 AND same account |
| Same project_type AND Same technology_platform AND same ISU AND \| grade difference\| <= 1 AND different account |
| Same project_type AND Same technology_platform AND same ISU AND \| total_exp difference\| <= 4 AND same account |
| Same project_type AND Same technology_platform AND same ISU AND \| total_exp difference\| <= 4 AND different account |
| Same project_nature AND Same application_area AND same ISU AND \|grade difference\| <= 1 AND same account |
| Same project_nature AND Same application_area AND same ISU AND \|grade difference\| <= 1 AND different account |
| Same application_area AND Same technology_platform AND same ISU AND \|grade difference\| <= 1 AND same account |
| Same application_area AND Same technology_platform AND same ISU AND \|grade difference\| <= 1 AND different account |
| Same application_area AND Same technology_platform AND same ISU AND \| total_exp difference\| <= 4 AND same account |
| Same application_area AND Same technology_platform AND same ISU AND \| total_exp difference\| <= 4 AND different account |

The hardware processor 104 is further configured by the instructions to identify one or more successors across platforms from the one or more users based on the one or more generated rules, and further generate a list of one or more plausible successors across platforms from the one or more successors for replacement of the predecessor. For example, one or more (business) rules with higher coverage may be taken (or considered) to select one or more plausible successors for each of the predecessor in the entity. The hardware processor 104 further selects at least one successor as potential replacement for the predecessor from the one or more plausible successors identified across platforms. In an embodiment, the selection of the at least one successor as the potential replacement for the predecessor from the one or more plausible successors is based on a similarity score computed for each of the one or more plausible successors.

The embodiments of the present disclosure implements one or more techniques for example, one or more unsupervised techniques and/or one or more supervised techniques to compute the similarity score. The one or more unsupervised techniques comprises at least one of Euclidean (E) distance measure technique, Mahalanobis (M) distance measure technique and Hamming (H) distance measure technique, a weighted H-E technique, and a weighted H-M technique. Similarly, the one or more supervised techniques comprises at least one of a metric learning based technique, and a classification based ranking technique. Euclidean distance between points x and y in multidimensional space is given by following equation.

$$D_{num=} d\,(x,\,y) = \sqrt{\sum (\,x\text{-}y)^2}$$

Here, to diminish the dominance of high variance of particular variable in distance computation standardized data may be used.

In case of Euclidean distance high varying (scaled) variable dominates the distance computation and highly co-varying attributes multiply contributions twice in the distance computation. To diminish these effects in computing the distance, variance and covariance of the attributes are taken in to the consideration to compute the distance. Mahalanobis distance formula can be written as:

$$D_{num} = d\,(x,\,y) = \sqrt{(\,x\text{-}y)^T \sum{}^{-1} (\,x\text{-}y)}$$

Where x and y are two arbitrary point in multidimensional space, $\sum$ covariance of the population (sample covariance if population covariance is not available). $D_{num}$ depicts the numeric distance between point x and y.

Hamming Distance measuring technique is also referred as Nominal distance. It is a ratio of the number of unmatched nominal attributes to the total number of the nominal attributes. It is distributed from values 0 to 1. It can be written as $D_{nom} = \frac{u}{|V_{nom}|}$ where 'u' number of the unmatched nominal attributes and $|V_{nom}|$ is the total number of the nominal attributes. Nominal distance values ranges from 0 to 1.

Combining numeric and nominal distance: Feature scaled numeric distance (Mahalanobis/Euclidean) as $D_{num}$ and nominal distance as $D_{nom}$ are combined with weight w (weight of the nominal distance). Final combined distance $D_f$ can be given as:

$$D_f = (1\text{-}w)\,D_{num} + w.D_{nom}$$

The unsupervised techniques for example, Euclidean (E) distance measure technique, Mahalanobis (M) distance measure technique and Hamming (H) distance measure technique, a weighted H-E technique, and a weighted H-M technique, computed attribute measures (e.g., numeric attributes) are used for computing similarity score. Distance computed by above mentioned techniques are considered as similarity score i.e., lower the distance higher is the similarity score. Such techniques include weight based combination of the numeric and nominal distance to compute the final distance. Plausible successors who have more similarity in terms of attributes illustrated in Table 1 are more suitable to replace given predecessor.

The supervised techniques, on another hand, examine the past replacement data and derive insights to apply on the current replacement scenario. For example, the metric learning based technique analyzes past data and computes metric or weights for each of attributes which were important during the replacement process. These metrics are used to weight the attributes while distance computation to compute similarity score. This implementation incorporates metric learning techniques such as Optimized Mahalanobis distance and Relevant Component Analysis, in one example embodiment. In a further example, classification based ranking technique, uses past replacement data to train classifiers such as NaiveBayes, KNN and Random Forest and applies it on current or test data set. In such a scenario, the similarity score is based on the class membership probability i.e., probability of a particular plausible successor to be an actual successor for a given predecessor. Here all plausible successors are ranked on the basis of class membership probability and top 'k' employees can be reported to be potential successors for a given predecessor.

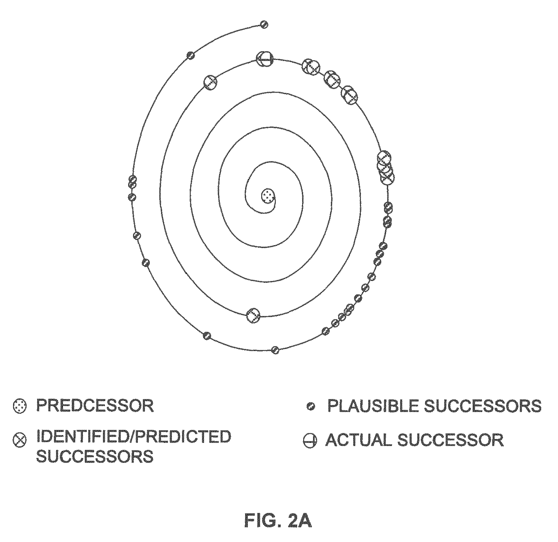

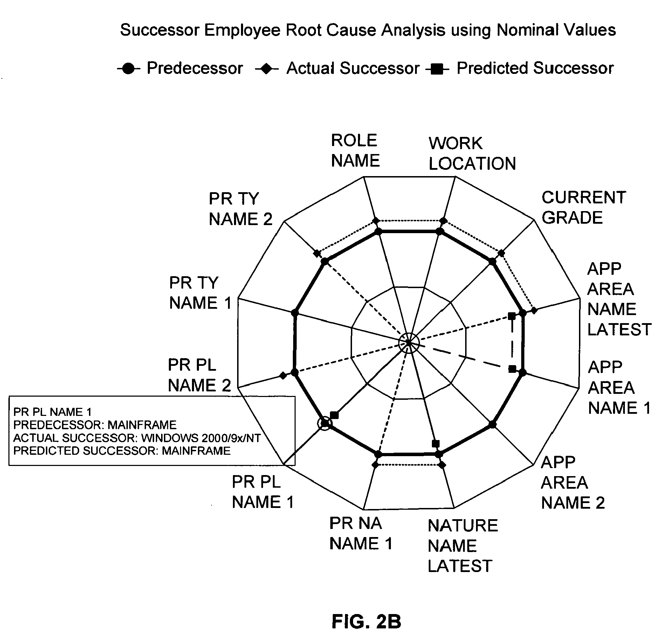

The hardware processor 104 is further configured to generate one or more graphical representations (as shown in FIGS. 2A-2B) which depict (or is indicative) at least one of (i) a position of one or more plausible successors from the predecessor based on the similarity score, and (ii) a comparison of one or more attribute patterns of the predecessor, one or more predicted successors, the one or more plausible successors from the one or more predicted successor, and an actual successor from the one or more plausible successors. FIGS. 2A-2B, with reference to FIG. 1, illustrates the one or more graphical representations. More particularly, FIG. 2A illustrates a graphical representation that depicts a position of the one or more plausible successors from the predecessor based on the similarity score according to an embodiment of the present disclosure. FIG. 2B illustrates a graphical representation that depicts a comparison of one or more attribute patterns of the predecessor, one or more predicted successors, the one or more plausible successors from the one or more predicted successors, and an actual successor from the one or more plausible successors according to an embodiment of the present disclosure. A user (e.g., a HR Manager) may also locate best successor by their preferences by filtering plausible successor on target organizational units such as project, account, business unit, and the like. For example, the hardware processor 104 processes a selection of one or more preferences in the one or more graphical representations as depicted in FIGS. 2A-2B wherein the one or more preferences comprises at least one of a project type, and an operational unit in the entity. Upon receiving a selection of the one or more preferences, the hardware processor 104 generates a list of one or more potential successors from the one or more plausible successors based on the one or more preferences. This list of the one or more potential successors comprises the actual successor as depicted in FIG. 2A-2B. Further, the RPM system 100 validates the one or more plausible successors against one or more decisions made by the user (e.g., the HR manager) for identifying an actual successor for the predecessor. This pattern of validation is implemented by the RPM system 100 to identify one or more subsequent plausible successors based on the one or more replacement patterns and the one or more decisions made by the user.

Alternatively, the RPM system 100 may execute the modules 108 comprising an input processing module that when executed by the hardware processor 104 process data specific to one or more users. The modules 108 may further include an identification module that when executed by the hardware processor 104 identifies at least one replacement for a predecessor in a particular position in an entity based on the data. The identification module further identifies, for the particular position, one or more replacement patterns from one or more replacement pattern datasets across platforms. The modules 108 may further include a rules generation module that when executed by the hardware processor 104 generates one or more rules based on the one or more identified replacement patterns and domain knowledge pertaining to the particular position. The identification module further identifies (or predicts) one or more successors across platforms from the one or more users based on the one or more generated rules, and then generates a list of one or more plausible successors across platforms from the one or more successors for replacement of the predecessor. The modules 108 may further include a score computation module that when executed by the hardware processor 104 computes a similarity score for each of the one or more plausible successors. The identification module further selects at least one successor (e.g., as an actual successor) as potential replacement for the predecessor from the one or more plausible successors identified across platforms.

The modules 108 may further include a graphical representation generation module that when executed by the hardware processor 108 generates one or more graphical representations indicative of at least one of (i) a position of one or more plausible successors from the predecessor based on the similarity score, and (ii) a comparison of one or more attribute patterns of the predecessor, one or more predicted successors, the one or more plausible successors from the one or more predicted successor, and an actual successor from the one or more plausible successors.

The graphical representation generation module further processes a selection of one or more preferences in the one or more graphical representations. The one or more preferences comprises at least one of a project type, and an operational unit in the entity. Based on the one or more preferences selection, the graphical representation generation module generates a list of one or more potential successors from the one or more plausible successors based on the one or more preferences, wherein the list of one or more potential successors comprises the actual successor as shown in FIG. 2B.

The modules 108 may further include a validation module that when executed by the hardware processor 104 validates the one or more plausible successors against one or more decisions made by a user for identifying an actual successor for the predecessor, further identifies one or more subsequent plausible successors based on the one or more replacement patterns and the one or more decisions made by the user.

The modules for example, the input processing module, the identification module, the rules generation module, the score computation module, the graphical representation generation module, and the validation module, are implemented as at least one of a logically self-contained part of a software program, a self-contained hardware component, and/or, a self-contained hardware component, with a logically self-contained part of a software program embedded into each of the hardware component that when executed perform the above method(s) described herein, in one embodiment.

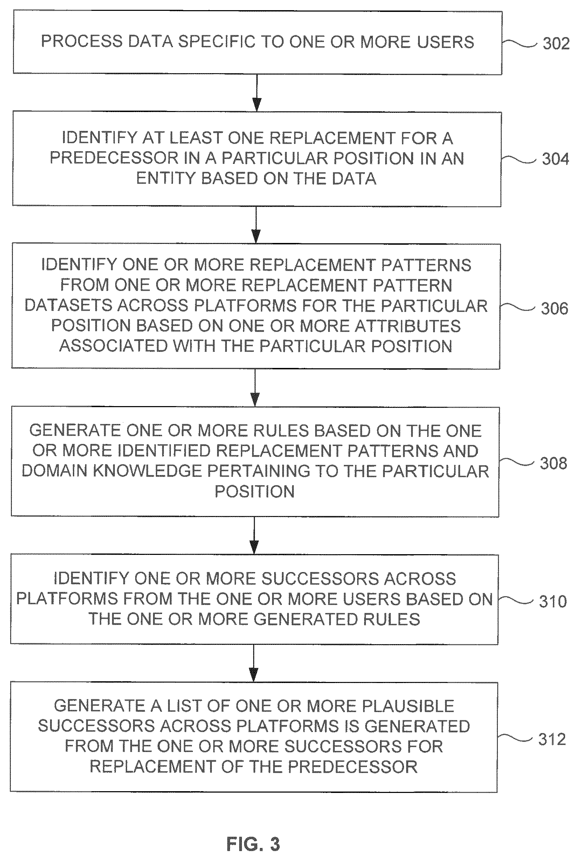

FIG. 3, with reference to FIGS. 1 through 2B, is a flow diagram illustrating a processor implemented method for generating a list of plausible successors using the RPM system 100 according to an embodiment of the present disclosure. In step 302, data specific to one or more users is processed. In step 304, at least one replacement is identified for a predecessor in a particular position in an entity based on the data. In step 306, one or more replacement patterns from one or more replacement pattern datasets across platforms are identified for the particular position based on one or more attributes associated with the particular position. The one or more attributes comprises at least one of records of the one or more users, one or more predecessor successor relationships specific to the particular position for a specified period.

In step 308, one or more rules are generated based on the one or more identified replacement patterns and domain knowledge pertaining to the particular position. In step 310, one or more successors across platforms are identified from the one or more users based on the one or more generated rules. In step 312, a list of one or more plausible successors across platforms is generated from the one or more successors for replacement of the predecessor. The method further includes selecting at least one successor as potential replacement for the predecessor from the one or more plausible successors identified across platforms. The selection may be based on a similarity score computed for each of the one or more plausible successors.

The method may further include generating one or more graphical representations indicative of at least one of (i) a position of one or more plausible successors from the predecessor based on the similarity score, and (ii) a comparison of one or more attribute patterns of the predecessor, one or more predicted successors, the one or more plausible successors from the one or more predicted successor, and an actual successor from the one or more plausible successors. The method may further include processing a selection of one or more preferences in the one or more graphical representations, wherein the one or more preferences comprises at least one of a project type, and an operational unit in the entity, and generating a list of one or more potential successors from the one or more plausible successors based on the one or more preferences, wherein the list of one or more potential successors comprises the actual successor.

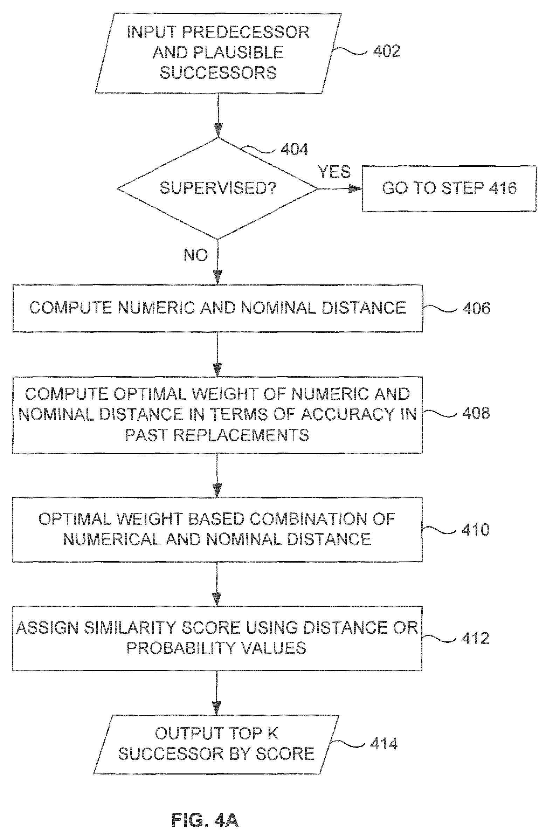

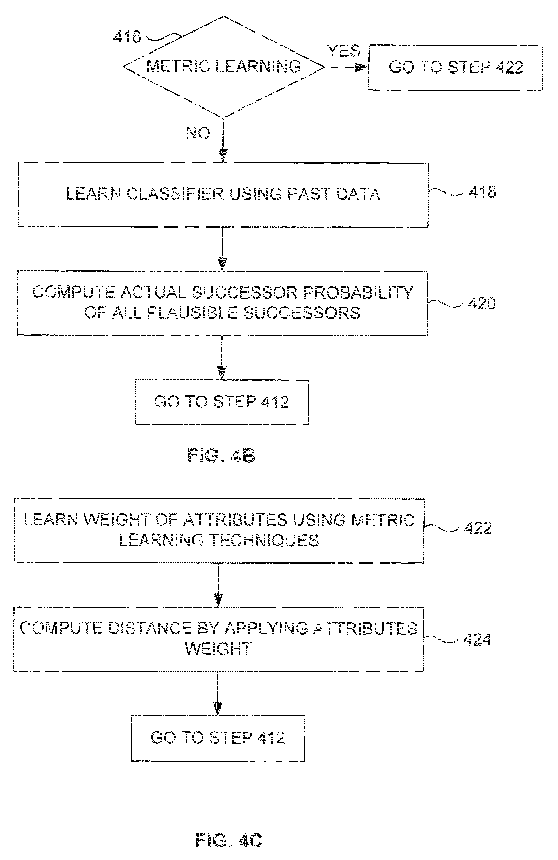

FIGS. 4A-4C, with reference to FIGS. 1 through 3, are flow charts illustrating a replacement planning technique implemented in the RPM system 100 of FIG. 1 according to an embodiment of the present disclosure. In step 402, predecessor and plausible successors are provided as an input to the RPM system 100. In step 404, it is checked whether similar score is computed using one or more supervised techniques or one or more unsupervised techniques. In step 406, the RPM system 100 computes a numeric and nominal distance for each plausible successor from the predecessor, when the one or more unsupervised techniques are implemented. In step 408, optimal weight of numeric and nominal distance are computed in terms of accuracy in past replacements. In step 410, optimal weight combinations of numeric and nominal distance are identified for associated plausible successors. In step 412, similarity score is computed and assigned using distance and probability value. In step 414, top 'k' successors are identified amongst the plausible successors based on the similarity score.

In step 416, it is checked whether the one or more supervised techniques is at least one of a metric learning technique or classification technique. In step 418, the RPM system 100 learns the classifier using the past data (e.g., one or more replacement patterns) when the one or more supervised techniques is the classification technique. In step 420, actual successor probability is computed for all plausible successors, and the steps 412 and 414 are repeated. In step 422, weight of attributes is learnt using metric learning techniques, when the one or more supervised techniques is identified as the metric learning technique in step 416. In step 424, distance is computed by applying attributes weight to the plausible successors, and the steps 412 and 414 are repeated.

Experimental results:

For a given database E = {e1, e2, . . .en} of employees and a particular employee e E E to be replaced (predecessor). Each employee $e_i$ is described in terms of the same set of n variables V = {V1, ... , Vn} i.e., each $e_i$ = $(x_1, . . . , x_n)$, where $x_j$ is a value for the variable $V_j$. Some of the n variables may be categorical. The goal is to identify a subset H(e) $\subseteq$ E containing K "most suitable" replacements for e (K is given). He can be thought of as the short-listed set of K possible replacements. For better control of the human factors involved in people management, the final replacement will still be manually identified from H(e).

Suitability of any employee in E as a possible replacement for e is measured by a score function (unknown, in general) f: E $\times$ E $\to$ [0, 1], where f(e, e') denotes how suitable employee e' is as a possible replacement for predecessor e. This score function needs to be estimated. It is assumed that f is a similarity function i.e., the more similar an employee is to a given predecessor, the higher are its chances of being chosen as the replacement. Often, a dataset of actual replacements D = {(x1, y1), ... , (xN, yN), } of N (predecessor, replacement) pairs is available, where each xi, yi 2 E. Note that D includes neither the set of plausible candidates nor the set of short-listed candidates for any of the replacements. Following approaches may be implemented for replacement identification: (1) Ignoring D, use a geometric distance measure (such as Euclidean or Mahalanobis) to identify K employees "nearest" to e, (2) Learn a classifier from D (after adding some negative examples of replacements to D), apply it to each employee in E, and choose a subset of K employees with predicted label +1, and (3) Use metric learning to learn the score function using D, then use it to identify K employees "nearest" to e.

It is noted that D consists of only positive examples of replacement. Considering all other employees as negative examples for every replacement is wasteful. The embodiments of the present disclosure, implements a multi-step approach with the following steps (e is the predecessor employee to be replaced). In the first step (candidate identification) only a subset SIM(e) of the remaining employees are identified, where each employee in SIM(e) is considered as "plausible" replacement for e and the actual replacement is chosen only from this subset. The employees in SIM(e) are candidate replacements for e; each employee in SIM(e) is supposed to be "highly similar" to e in terms of some well-defined criteria. In the second step, called replacement short-listing, once SIM(e) is identified, a small K-size subset H(e) of SIM(e) is identified as the "most suitable" replacement short-list for e (usually, K = 5, 10, or 15). Often, these top K most suitable replacements in H(e) are ranked in terms of their suitability as a replacement for e. In the third step, an employee 'r' in H(e) is identified as the actual replacement for e. This step may include receiving inputs (e.g., performing manual), and may consist of human-centric HR processes (such as interviews and feedback).

Data from a particular business unit of a large multi-national IT services organization for the two-year period 01-Apr-2011 to 31-Mar-2013. First part, D1 of the dataset consists of 546 pairs of employees (predecessor, replacement), where the predecessor is always in the PROJECT LEADER role. The reason being, because PROJECT LEADER is the most crucial leadership role in a project and carries the overall responsibility of delivering the project within the specified time, efforts and budget, and also meeting stringent quality criteria. D1 does not include any data about the candidate set SIM(e) nor about the successor short-list set H(e), for any predecessor e (the final (actual) successor r is known for each e). Each pair of employees in D1 can be considered as a positive example of replacement. The second part, D2 of the dataset consists of employees (from this business unit only), who were neither predecessors nor replacements in the first dataset i.e., they are the remaining employees. Each employee, including predecessors and replacements, is described using the data variables (i.e., features); some are shown below:

V5: Text Project type: most experienced in
V6: Text Project type: second most experienced in
V7: Text Project nature: most experienced in
V8: Text Project nature: second most experienced in
V9: Text Project application area: most experienced in
V10: Text Project application area: second most experienced in
V11: Text Project technology platform: most experienced in
V12: Text Project technology platform: second most experienced in

Each employee has demographic attributes such as gender, age, or grade. Work in each account (i.e., customer) is organized as a set of software development projects for that customer. Each project has a start and end date and a designated team, mostly consisting of software engineers. Each team member in a project has a specific role (e.g., PROJECT LEADER, REQ ANALYST, DB DESIGNER, DEVELOPER, TESTER) and carries out tasks in accordance with the assigned role. A subset of roles is designated as leadership roles and experience of an employee in them is counted as leadership experience. A total of 4528 projects were active in this period, on which a total of 1597918 person-days efforts were spent by 5132 distinct employees. The actual number of employees varies from month-to-month; hence when an employee 'e' leaves in a particular month, only employees present in that month need to be considered for replacement for e. Over time, each employee works in many different projects. Each project has several attributes such as project type (e.g., Production Support, Maintenance, Development, Reengineering, Migration etc.), project nature (e.g., ABC, XYZ, Consulting), technology platforms (e.g., Unix, AS 400, Mainframe, MS-Windows), application area (e.g., Groupware, E-Commerce, DW, Systems Management).

Values in the record for each employee vary with time; e.g., age or experience i.e., there is actually a sequence of records for each employee, one record for each unit of time (e.g., quarter). When a successor is chosen for a predecessor at a particular point in time, the records of the corresponding quarter are used for identifying candidate employees and for preparing the successor short-list. Salient patterns in dataset D1 are:

1. 166 (30.4%) replacements had more experience than predecessor; 231 (42.3%) replacements had less experience than predecessor; and 149 (27.3%) replacements had "similar" experience ($\pm$1 year) as predecessor.
2. 165 (30.2%) replacements were older than predecessor; 223 (40.8%) replacements were younger than predecessor; and 158 (28.9%) replacements had "similar" age ($\pm$1 year) as predecessor.
3. 47 (8.6%) replacements had more leadership experience than predecessor; 216 (39.6%) replacements had less leadership experience than predecessor; and 283 (51.8%) actual replacements had "similar" leadership experience ($\pm$10%) as predecessor.
4. 98.7% replacements were from the same business unit as predecessor.
5. 98.2% replacements have the same project nature as the predecessor; i.e., e.V7 = r.V7 or e.V7 = r.V8 or e.V8 = r.V7 or e.V8 = r.V8.
6. 93.0% replacements have same technology platform as predecessor; i.e., scriptsize e.V11 = r.V11 or e.V11 = r.V12 or e.V12 = r.V11 or e.V12 = r.V12.
7. 93.0% replacements have same application area as predecessor; i.e., e.V9 = r.V9 or e.V9 = i-.V10 or e.V10 = r.V9 or e.V10 = r.V10.
8. 91.9% replacements have same project type as predecessor; i.e., e.V5 = r.V5 or e.V5 = r.V6 or e.V6 = r.V5 or e.V6 = r.V6.
9. 90.5% replacements are within the same account as the predecessor.
10. 76.0% replacements are either from the same grade as the predecessor or one grade above or below that of the predecessor.
11. 72.7% replacements are from the same location as the predecessor.
12. 52.9% replacements had the same role as the predecessor.
13. 50.2% replacements are within the same project as the predecessor.
14. 42.7% replacements had similar age as the predecessor ($\pm$2 years)

Let E denote the set of employees available at the time when 'e' needs to be replaced. The first need is to identify a subset SIM(e) $\subseteq$ E of plausible candidate replacements for 'e'. The embodiments of the present disclosure use the replacement patterns found in actual replacements as a guide to define some domain rules to identify the candidate subset SIM(e) for e. Below are illustrative rules for identifying candidates for a given predecessor (% recall in brackets).

1. Same project type AND |grade difference| $\leq$ 1 AND same account (64.1)
2. Same project type AND |grade difference| $\leq$ 1 AND different account (5.3)
3. Same project type AND |total exp difference| $\leq$ 4 AND same account (65.6)
4. Same project type AND |total exp difference| $\leq$ 4 AND different account (5.5)
5. Same project nature AND |grade difference| $\leq$ 1 AND same account (67.6)
6. Same project nature AND |grade difference| $\leq$ 1 AND different account (6.0)
7. Same project nature AND |total exp difference| $\leq$ 4 AND same account (68.7)
8. Same project nature AND |total exp difference| $\leq$ 4 AND different account (6.0)
9. Same application area AND |grade difference| $\leq$ 1 AND same account (64.5)
10. Same application area AND | grade difference| $\leq$ 1 AND different account (5.9)
11. Same application area AND |total exp difference| $\leq$ 4 AND same account (65.2)
12. Same application area AND |total exp difference| $\leq$ 4 AND different account (5.7)
13. Same technology platform AND |grade difference| $\leq$ 1 AND same account (64.8)
14. Same technology platform AND |grade difference| $\leq$ 1 AND different account (5.7)
15. Same technology platform AND |total exp difference| $\leq$ 4 AND same account (65.9)
16. Same technology platform AND |total exp difference| $\leq$ 4 AND different account (5.7)

The sub-condition "same project type" stands for the pattern (8) given above; similarly for other sub-conditions (even numbered rules cover rare replacement patterns). With these domain rules, the embodiments of the present disclosure derive one or more different strategies for creating SIM(e) for any given e. For a rule $R_i$, let Si(e) $\subseteq$ E denote those employees which satisfy rule $R_i$. Strategies Singular and Exhaustive yield large sets of plausible candidates employees for any given predecessor; whereas Random-All gives at most $m \times M$ employees in the set SIM(e), where '$m$' is the number of rules used.

1. Singular: Use only one particular rule (say Ri): then SIM(e) = $S_i$(e).
2. Random-All: Select a subset $A_i$(e) of M employees from the set $S_i$(e). Take a union of these subsets: SIM(e) = $A_1$(e) U $A_2$(e) .....
3. Exhaustive: SIM(e) = S1(e) U S2(e) .....

Distance-based Unsupervised Approach:

Technique_Distance_based_replacement_identification:

Input $K$, $M$, employee 'e' (predecessor)
Input $D_2$ = {$x_1$, ....., $x_m$} set of all employees
Output H $\subseteq$ $D_2$ of K feasible replacements (initially empty)
Identify SIM(e) using a suitable strategy // Singular, Random-All or Exhaustive
Rank employees in SIM(e) in terms of their "similarity" with e
H: = the top K employees from this ordered set return H

A distance (or similarity) based approach for replacement identification is shown above. The embodiments of the present disclosure uses any one of the many possible ways to compute the similarity score of each employee in this set SIM(e) with the given predecessor e. Using only the numeric variables, the RPM system 100 uses Euclidean or Mahalanobis distance. If only categorical variables are used, then the RPM system 100 can use an appropriate distance measure. If both type of variables are used, then the RPM system 100 uses a weighted average of the two distances (weights are specified by the user). The RPM system 100 use Hamming distance measure technique to compute the distance between two employees in terms of only the categorical variables.

To determine the accuracy of the technique over the training dataset $D_1$, the technique is modified to add 'e' to the set $A$ and then check if 'e' is present in the set $S$. If 'e' is present in the set $S$, (if yes), it is counted as a success and otherwise, as a failure. The % of predecessors in $D_1$ for which the technique succeeds is then the accuracy of the technique (i.e., this is the recall $K$). Input $M$ controls how many negative examples are picked using each (business) rule. It is to be noted that employees that satisfy a (business) rule are already "similar" to the predecessor, since each (business) rule is derived from a pattern observed in actual replacements. Input $K$ controls how many feasible candidates are reported for the final step (third step as described above) - which is a final selection. Table 4 below shows the results obtained using the unsupervised replacement identification technique, under various parameter settings. Following ways may be used to compute "similarity score" between a predecessor and any other employee:

1. Hamming distance measure technique: use only textual variables and use Hamming distance
2. Euclidean distance measure technique: use only numeric variables and use Euclidean distance
3. Mahalanobis distance measure technique: Use only numeric variables and use Mahalanobis distance measure technique
4. Weighted-H-E distance measure technique: Use all variables and use a weighted sum of Hamming and Euclidean distances between textual and numeric variables respectively
5. Weighted-H-M distance measure technique: Same as above, except use Mahalanobis distance measure technique instead of Euclidean distance measure technique.

For the strategy Random-All, as K increases, the % recall improves. As $M$ increases, the % recall drops because adding more "similar" examples confuses the distance computations. Numeric variables seem much less important than the categorical attributes, which seem to matter the most in replacement selection. The RPM system 100 provides experimental results with various weightages for Hamming distance and numeric distance. Below Table 4 shows the results for the weight vector (0.8, 0.2). For better understanding of the embodiments of the present disclosure, and simplicity, results for only 4 domain rules are shown for Singular. The Exhaustive uses only the odd-numbered rules, in one example embodiment.

Table 4

| Method | Candidate Strategy | K=5 | K=10 | K = 15 |
|---|---|---|---|---|
| Hamming distance measure unsupervised technique | Random-All M = 5 | **56.78** | **71.43** | **80.04** |
| | Random-All M = 10 | 47.80 | 61.54 | 67.77 |
| | Singular R1 | 25.09 | 36.26 | 43.04 |
| | Singular R3 | 25.65 | 35.24 | 42.07 |
| | Singular R5 | 24.18 | 35.53 | 42.12 |
| | Singular R7 | 24.68 | 34.07 | 41.44 |
| | Exhaustive | 22.89 | 32.60 | 39.93 |
| Euclidean distance measure unsupervised technique | Random-All M = 5 | 24.91 | 38.64 | 46.89 |
| | Random-All M = 10 | 17.77 | 26.01 | 33.15 |
| | Singular R1 | 15.02 | 21.98 | 26.56 |
| | Singular R3 | 14.58 | 19.93 | 25.09 |
| | Singular R5 | 13.74 | 19.78 | 23.26 |
| | Singular R7 | 12.89 | 18.42 | 21.55 |
| | Exhaustive | 11.54 | 17.22 | 20.15 |
| Mahalanobis distance measure unsupervised technique | Random-All M = 5 | 18.68 | 30.59 | 39.38 |
| | Random-All M = 10 | 11.54 | 19.78 | 25.09 |
| | Singular R1 | 11.36 | 17.22 | 19.05 |
| | Singular R3 | 12.36 | 16.24 | 18.27 |
| | Singular R5 | 9.52 | 14.65 | 17.03 |
| | Singular R7 | 10.50 | 15.10 | 16.76 |
| | Exhaustive | 9.89 | 14.29 | 15.93 |
| Weighted H-E; (0.8, 0.2) distance measure unsupervised technique | Random-All M = 5 | 42.12 | 56.04 | 63.55 |
| | Random-All M = 10 | 52.2 | 66.12 | 72.89 |
| | Singular R1 | 24.36 | 30.95 | 37.73 |
| | Singular R3 | 23.62 | 32.29 | 38.19 |
| | Singular R5 | 23.26 | 30.04 | 36.45 |
| | Singular R7 | 22.84 | 30.76 | 36.83 |
| | Exhaustive | 22.16 | 28.57 | 34.62 |

(continued)

| Method | Candidate Strategy | K=5 | K=10 | K = 15 |
|---|---|---|---|---|
| Weighted H-M; (0.8, 0.2) distance measure unsupervised technique | Random-All M = 5 | 53.30 | 70.33 | 76.92 |
| | Random-All M = 10 | 43.22 | 57.51 | 65.93 |
| | Singular R1 | 20.70 | 29.85 | 37.36 |
| | Singular R3 | 21.96 | 29.89 | 36.72 |
| | Singular R5 | 19.96 | 28.21 | 35.90 |
| | Singular R7 | 21.55 | 29.10 | 35.54 |
| | Exhaustive | 20.15 | 27.11 | 34.62 |
| Naïve Bayes (Supervised) | Random-All M = 5 | 41.76 | 53.66 | 60.99 |
| | Random-All M = 10 | 47.80 | 56.41 | 61.36 |
| | Singular R1 | 35.17 | 42.50 | 49.27 |
| | Singular R3 | 45.46 | 56.18 | 61.26 |
| | Singular R5 | 47.44 | 56.05 | 60.63 |
| | Singular R7 | 46.41 | 56.18 | 59.49 |
| Nearest Neighbor (Supervised) | Random-All M = 5 | 62.83 | 76.01 | 81.14 |
| | Random-All M = 10 | 45.07 | 51.30 | 56.80 |
| | Singular R1 | 52.94 | 63.56 | 70.89 |
| | Singular R3 | 44.51 | 52.98 | 59.01 |
| | Singular R5 | 42.97 | 50.57 | 55.33 |
| | Singular R7 | 44.02 | 49.54 | 55.08 |
| Random Forest (Supervised) | Random-All M = 5 | 42.87 | 51.85 | 58.44 |
| | Random-All M = 10 | 42.31 | 50.92 | 55.14 |
| | Singular R1 | 34.26 | 42.87 | 49.10 |
| | Singular R3 | 39.84 | 49.80 | 55.45 |
| | Singular R5 | 41.57 | 50.00 | 54.22 |
| | Singular R7 | 41.79 | 49.53 | 53.59 |
| Metric-learning | Random-All M = 5 | 26.37 | 40.10 | 48.16 |
| | Random-All M = 10 | 19.78 | 28.57 | 34.06 |
| | Singular R1 | 14.83 | 20.51 | 26.19 |
| | Singular R3 | 14.20 | 18.45 | 24.35 |
| | Singular R5 | 13.36 | 17.94 | 23.80 |
| | Singular R7 | 12.70 | 16.94 | 21.54 |

Classification:

Classification based Ranking: Probabilistic classifier such as Naive Bayes, KNN and Random Forest are used to identify top k successors for the given predecessors. Here Training data set consist of the past positive replacement made by HR labelled as 1 and negative replacement is formed by selecting a random non-actual successor employee for each predecessor present in the positive replacement. Testing data consist of positive replacements in Training data set labelled as 1 and predecessor with each plausible successors relationship (plausible replacements) as negative replacement labelled as 0. Each replacement or instance of data set represents the attribute value difference of predecessor and successor (for numeric data its Predecessor's attribute value-successor's attribute value and for the nominal data exact match of predecessor's and successor's attribute value results 1 else 0). For each of the plausible replacements classifier assigns probability to be labelled as 1 i.e., replacement probability to be considered as actual replacement. The RPM system 100 evaluates the classifier based on the accuracy in past replacement data. Each of probabilistic classifier assigns class membership probability to each of the training instances for each class. Class membership probability (probability that particular instance should be labelled as 1) are used to sort all plausible successors for each of given target predecessor. Each plausible successor is sorted in descending order of the class membership probability from target predecessor and top k employees are reported to be best successors.

Class Membership Probability: Class membership probability as $P\left(\dfrac{Class=1}{V'num1, V'nom}\right)$ represent the probability of the data tuple to be class 1 (positive replacement or 0 to be negative replacement) given $V'_{num1}$ and $V'_{nom}$. Here $V'_{num1}$ represents the difference vector of the attribute values difference from predecessor to successor (Predecessor's attribute value - successor's attribute value) and $V'_{nom}$ represents the match between predecessor and successor nominal attribute values (exact match of predecessor and successor results 1 else 0). Now all the plausible successors including actual successor are ranked by the probability value of the class 1 for each predecessor and tried to locate the actual successor in the given k top ranked plausible replacements. Following probabilistic classifiers are applied in the RPM system 100.

The Naive Bayes Classifier technique is based on the Bayesian theorem and is particularly suited when the dimensionality of the inputs is high. The NaiveBayes classification model can be represented using following posterior probability.

$$\hat{y} = \operatorname*{argmax}_{k \in \{1,...,K\}} \; p(C_k) \prod_{i=1}^{n} p(x_i | C_k)$$

K Nearest Neighbor Classifier (kNN): kNN output is a class membership. An object is classified by a majority vote of its neighbors, with the object being assigned to the class most common among its $k$ nearest neighbors ($k$ is a positive integer, typically small). If $k = 1$, then the object is simply assigned to the class of that single nearest neighbor.

Random Forest Classifier: Random Forest is a class of ensemble methods specifically designed for decision trees. It combines the predictions of multiple decision trees and each tree is generated based on the independent random set of vectors. Upper bound of the generalization error converges to follow:

$$\text{Generalization error} \leq \frac{p(1-s^2)}{s^2}$$

where p is average correlation among the trees and s is strength of the tree classifiers. Here strength of the classifiers refers to average performance of the classifiers and given by the classifier margin:

$$\text{margin}, M(X, Y) = P(Y(\theta) = Y) - \max_{Z \neq Y} P(Y(\theta) = Z),$$

Where $Y(\theta)$ predicted class of $X$ using random vector $\theta$ and higher the margin is more likely classifier would predict correctly. Random vectors are incorporated in the tree building process in three ways as random f features selection, constructing features using linear combination of the available features and randomly select one of F best splits at each node of the decision trees.

It is not clear how to adapt the usual classification framework for replacement prediction. Firstly, each training instance in the replacement dataset $D_1$ consists of a pair of objects, rather than a single object with a class label. Secondly, there are no negative training examples. Obviously, for any predecessor e in $D_1$, the pairs (e, e') for all possible employees e' in the dataset $D_2$ can be considered as a negative example. However, this yields extremely large number of negative examples for every positive replacement pair and an extreme class imbalance. One way to solve the first problem is to translate each pair of employees into a single object consisting of the differences between the corresponding variables. For each pair (x, y), where x = ($x_1$, ... , $x_n$) and y = ($y_1$, . . ., $y_n$), create a single object ($x_1 - y_1$, . . . , $x_n - y_n$). For categorical variables, the difference is 1 if both values match exactly; otherwise it is 0. If y is the actual replacement for x, then this object has the class label +1. If y was some employee other than the actual replacement for x, then this object has the class label -1. The embodiments of the present disclosure adapt the standard cross-validation procedure. The dataset $D_1$ of 546 replacements may be randomly divided into multiple parts: 80% (437) for training and 20% (109) for testing. 437 employees were randomly selected as negative training examples. Thus 437 vectors were labeled as +1, where each vector consists of the difference between the vectors for a predecessor and his/her actual successor. The RPM system 100 also obtained 437 vectors labeled as -1, where each vector consists of the difference between the vectors for a predecessor and a randomly selected employee. A classifier was trained on this dataset.

For testing, new datasets was created using the various candidate identification strategies discussed earlier. For example, using Random-All with M = 5, $16 \times 5 = 80$ records were created for each predecessor e, and the actual successor was also added to this set. A record in the testing dataset then consisted of the difference between 'e' and one of the 80 randomly selected employees that meet the particular domain rule. Thus, for a particular predecessor e (among 109), there were 81 records in the testing dataset (the class imbalance was noted). For a particular predecessor 'e' (among 103 in the testing dataset), a probabilistic classifier was used (trained on the training dataset) to predict the probability that a particular record in the training dataset belongs to class +1, and these 81 records were sorted in terms of this probability and checked if the actual successor is among the top K. If yes, then this was counted as a success for that particular predecessor; otherwise a failure. The above methodology (procedure) was repeated for several (e.g., 5) times (5-fold cross validation) and the average accuracy of prediction on the training dataset was reported. Above Table 4 shows the results; for better understanding of the embodiments of the present disclosure, and for simplicity, Exhaustive results have been omitted. For Random-All, the nearest-neighbor classifier (number of neighbors = 20 was used). This shows the best prediction accuracy. As expected, generally the accuracy numbers are higher for supervised classification than unsupervised prediction.

Metric Learning:

Dataset of replacements gives hints about the "similarity" function used by teams (e.g., HR executives) in identifying replacements. Metric learning is about automatically learning a task-specific distance function $\hat{d}(x,y)$ in a supervised manner. For a given dataset $S$ of similar pairs objects and a dataset D of dissimilar pairs of objects, Mahalanobis distance measure technique denotes any distance function of the form $d_A(x, y) = \sqrt{(x-y)^T A (x-y)}$, where A is a positive semi-definite matrix. The matrix A is identified such that the sum of distances between similar objects is minimized and the sum of distances between dissimilar objects is maximized. In conventional systems, this is formalized and solved as a convex optimization problem in two separate cases: A is assumed to be a diagonal matrix (solved using Newton-Raphson) or A is assumed to be a full matrix (solved using a gradient-based iterative algorithm). However, the RPM system 100 pairs (predecessor, actual replacement) are treated as similar and (predecessor, randomly-selected-employee) are treated as dissimilar. The testing is same as for unsupervised distance, where the RPM system 100 use the matrix 'A' learnt in the training phase to compute the distance $d_A$ between pairs of employees. The RPM system 100 only uses numerical attributes to learn the $13 \times 13$ matrix A. Table 1 shows the results for the diagonal case. Diagonal entries of the matrix A learned by the technique are: 1.07, 1.02, 0.91, 0.97, 1.00, 0.03, 1.26, 0.95, 0.97, 1.01, 0.99, 1.00, 0.99; e.g., $A_{3,3} = 0.91$ means the weight of the third numeric variable $V_{15}$ in computing the distance. Compared to the unsupervised replacement identification 1, metric learning shows better performance than Mahalanobis distance measure technique and comparable to Euclidean distance measure technique. Results of learning full matrix A are similar, which means the distance used by humans in replacement identification (in this case-study) is close to Euclidean distance measure technique (for numeric attributes).

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure enable the RPM system 100 to generate one or more rules to select the plausible successors. Unlike conventional systems where employees are ranked and restricted to just one level below in the hierarchies, the RPM system 100 implements the generated rules that does not restrict ranking employees who are one level below in the role hierarchy but it also incorporates HR domain knowledge and past replacement patterns to effectively select plausible successors from all levels and across platforms in the role hierarchy of the organization. Further the RPM system 100 computes similarity score using distance measuring techniques, metric learning and probabilistic classifiers, which represents the comparison between predecessor and each plausible successor. The RPM system 100 further analyzes the past data, for example, replacement patterns, and identifies the pattern adopted by the HR management during past replacements and learn from the behavior/patterns to identify plausible successors.

It is, however to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W), DVD, and Blu-Ray Disc.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output (I/O) devices (including but not limited to keyboards, displays, pointing devices, etc.) can be coupled to the system either directly or through intervening I/O controllers. Network adapters may also be coupled to the system to enable the data processing system to become coupled to other data processing systems or remote printers or storage devices through intervening private or public networks. Modems, cable modem and Ethernet cards are just a few of the currently available types of network adapters.

A representative hardware environment for practicing the embodiments may include a hardware configuration of an information handling/computer system in accordance with the embodiments herein. The system herein comprises at least one processor or central processing unit (CPU). The CPUs are interconnected via system bus to various devices such as a random access memory (RAM), read-only memory (ROM), and an input/output (I/O) adapter. The I/O adapter can connect to peripheral devices, such as disk units and tape drives, or other program storage devices that are readable by the system. The system can read the inventive instructions on the program storage devices and follow these instructions to execute the methodology of the embodiments herein.

The system further includes a user interface adapter that connects a keyboard, mouse, speaker, microphone, and/or other user interface devices such as a touch screen device (not shown) to the bus to gather user input. Additionally, a communication adapter connects the bus to a data processing network, and a display adapter connects the bus to a display device which may be embodied as an output device such as a monitor, printer, or transmitter, for example.

The preceding description has been presented with reference to various embodiments. Persons having ordinary skill in the art and technology to which this application pertains will appreciate that alterations and changes in the described structures and methods of operation can be practiced without meaningfully departing from the principle, spirit and scope.

**Claims**

1. A processor implemented system comprising:

   a memory storing instructions;
   a communication interface; and
   a hardware processor coupled to said memory, wherein said hardware processor is configured by said instructions to:

   process data specific to one or more users,
   identify at least one replacement for a predecessor in a particular position in an entity based on said data,
   identify, for said particular position, one or more replacement patterns from one or more replacement pattern datasets across platforms, wherein said one or more replacement patterns are identified across platforms based on one or more attributes associated with said particular position,
   generate one or more rules based on said one or more identified replacement patterns and domain knowledge pertaining to said particular position,
   identify one or more successors across platforms from said one or more users based on said one or more generated rules, and
   generate a list of one or more plausible successors across platforms from said one or more successors for replacement of said predecessor.

2. The processor implemented system of claim 1, wherein said hardware processor is further configured by said instructions to select at least one successor as potential replacement for said predecessor from said one or more plausible successors identified across platforms based on a similarity score computed for each of said one or more plausible successors.

3. The processor implemented system of claim 2, wherein said similarity score is computed using at least one of an unsupervised technique and a supervised technique, wherein said unsupervised technique comprises at least one of Euclidean (E) distance measure technique, Mahalanobis (M) distance measure technique and Hamming (H) distance measure technique, a weighted H-E technique, and a weighted H-M technique, and wherein said supervised technique comprises at least one of a metric learning based technique, and a classification based ranking technique.

4. The processor implemented system of claim 3, wherein said hardware processor is further configured by said instructions to generate one or more graphical representations comprising at least one of (i) a position of one or more plausible successors from said predecessor based on said similarity score, and (ii) a comparison of one or more attribute patterns of said predecessor, one or more predicted successors, said one or more plausible successors from said one or more predicted successor, and an actual successor from said one or more plausible successors.

5. The processor implemented system of claim 4, wherein said hardware processor is further configured by said instructions to:

process a selection of one or more preferences in said one or more graphical representations, wherein said one or more preferences comprises at least one of a project type, and an operational unit in said entity, and generate a list of one or more potential successors from said one or more plausible successors based on said one or more preferences, wherein said list of one or more potential successors comprises said actual successor.

6. The processor implemented system of claim 1, wherein said one or more attributes comprises at least one of records of said one or more users, one or more predecessor successor relationships specific to said particular position for a specified period.

7. The processor implemented system of claim 1, wherein said hardware processor is further configured by said instructions to validate said one or more plausible successors against one or more decisions made by a user for identifying an actual successor for said predecessor.

8. The processor implemented system of claim 7, wherein said hardware processor is further configured by said instructions to identify one or more subsequent plausible successors based on said one or more replacement patterns and said one or more decisions made by said user.

9. A processor implemented method comprising:

processing data specific to one or more users;
identifying at least one replacement for a predecessor in a particular position in an entity based on said data;
identifying, for said particular position, one or more replacement patterns from one or more replacement pattern datasets across platforms, wherein said one or more replacement patterns are identified across platforms based on one or more attributes associated with said particular position;
generating one or more rules based on said one or more identified replacement patterns and domain knowledge pertaining to said particular position;
identifying one or more successors across platforms from said one or more users based on said one or more generated rules; and
generating a list of one or more plausible successors across platforms from said one or more successors for replacement of said predecessor.

10. The processor implemented method of claim 9, further comprising selecting at least one successor as potential replacement for said predecessor from said one or more plausible successors identified across platforms, wherein said at least one successor is selected as potential replacement for said predecessor from said one or more plausible successors based on a similarity score computed for each of said one or more plausible successors.

**11.** The processor implemented method of claim 10, further comprising: generating one or more graphical representations indicative of at least one of (i) a position of one or more plausible successors from said predecessor based on said similarity score, and (ii) a comparison of one or more attribute patterns of said predecessor, one or more predicted successors, said one or more plausible successors from said one or more predicted successor, and an actual successor from said one or more plausible successors.

**12.** The processor implemented method of claim 11, further comprising:

processing a selection of one or more preferences in said one or more graphical representations, wherein said one or more preferences comprises at least one of a project type, and an operational unit in said entity; and generating a list of one or more potential successors from said one or more plausible successors based on said one or more preferences, wherein said list of one or more potential successors comprises said actual successor.

**13.** One or more non-transitory machine readable information storage mediums comprising one or more instructions which when executed by one or more hardware processors causes:

processing data specific to one or more users;
identifying at least one replacement for a predecessor in a particular position in an entity based on said data;
identifying, for said particular position, one or more replacement patterns from one or more replacement pattern datasets across platforms, wherein said one or more replacement patterns are identified across platforms based on one or more attributes associated with said particular position;
generating one or more rules based on said one or more identified replacement patterns and domain knowledge pertaining to said particular position;
identifying one or more successors across platforms from said one or more users based on said one or more generated rules; and
generating a list of one or more plausible successors across platforms from said one or more successors for replacement of said predecessor.

**14.** The one or more non-transitory machine readable information storage mediums of claim 13, wherein said one or more instructions which when executed by said one or more hardware processors further causes:

selecting at least one successor as potential replacement for said predecessor from said one or more plausible successors identified across platforms, wherein said at least one successor is selected as potential replacement for said predecessor from said one or more plausible successors based on a similarity score computed for each of said one or more plausible successors; and
generating one or more graphical representations indicative of at least one of (i) a position of one or more plausible successors from said predecessor based on said similarity score, and (ii) a comparison of one or more attribute patterns of said predecessor, one or more predicted successors, said one or more plausible successors from said one or more predicted successor, and an actual successor from said one or more plausible successors.

**15.** The one or more non-transitory machine readable information storage mediums of claim 14, wherein said one or more instructions which when executed by said one or more hardware processors further causes:

processing a selection of one or more preferences in said one or more graphical representations, wherein said one or more preferences comprises at least one of a project type, and an operational unit in said entity; and generating a list of one or more potential successors from said one or more plausible successors based on said one or more preferences, wherein said list of one or more potential successors comprises said actual successor.

REPLACEMENT PLANNING AND MANAGEMENT
SYSTEM
100

MEMORY
102

MODULES 108

HARDWARE
PROCESSOR
104

I/O INTERFACE
106

FIG. 1

⊙ PREDCESSOR       ⊘ PLAUSIBLE SUCCESSORS

⊗ IDENTIFIED/PREDICTED       ⊖ ACTUAL SUCCESSOR
  SUCCESSORS

FIG. 2A

Successor Employee Root Cause Analysis using Nominal Values

-●- Predecessor -◆- Actual Successor -■- Predicted Successor

ROLE
NAME

WORK
LOCATION

PR TY
NAME 2

CURRENT
GRADE

PR TY
NAME 1

APP
AREA
NAME
LATEST

PR PL
NAME 2

APP
AREA
NAME 1

PR PL NAME 1
PREDECESSOR: MAINFRAME
ACTUAL SUCCESSOR: WINDOWS 2000/9x/NT
PREDICTED SUCCESSOR: MAINFRAME

APP
AREA
NAME 2

PR PL
NAME 1

PR NA
NAME 1

NATURE
NAME
LATEST

FIG. 2B

PROCESS DATA SPECIFIC TO ONE OR MORE USERS ~ 302

IDENTIFY AT LEAST ONE REPLACEMENT FOR A PREDECESSOR IN A PARTICULAR POSITION IN AN ENTITY BASED ON THE DATA ~ 304

IDENTIFY ONE OR MORE REPLACEMENT PATTERNS FROM ONE OR MORE REPLACEMENT PATTERN DATASETS ACROSS PLATFORMS FOR THE PARTICULAR POSITION BASED ON ONE OR MORE ATTRIBUTES ASSOCIATED WITH THE PARTICULAR POSITION ~ 306

GENERATE ONE OR MORE RULES BASED ON THE ONE OR MORE IDENTIFIED REPLACEMENT PATTERNS AND DOMAIN KNOWLEDGE PERTAINING TO THE PARTICULAR POSITION ~ 308

IDENTIFY ONE OR MORE SUCCESSORS ACROSS PLATFORMS FROM THE ONE OR MORE USERS BASED ON THE ONE OR MORE GENERATED RULES ~ 310

GENERATE A LIST OF ONE OR MORE PLAUSIBLE SUCCESSORS ACROSS PLATFORMS IS GENERATED FROM THE ONE OR MORE SUCCESSORS FOR REPLACEMENT OF THE PREDECESSOR ~ 312

**FIG. 3**

INPUT PREDECESSOR AND PLAUSIBLE SUCCESSORS — 402

SUPERVISED? — 404

YES → GO TO STEP 416

NO

COMPUTE NUMERIC AND NOMINAL DISTANCE — 406

COMPUTE OPTIMAL WEIGHT OF NUMERIC AND NOMINAL DISTANCE IN TERMS OF ACCURACY IN PAST REPLACEMENTS — 408

OPTIMAL WEIGHT BASED COMBINATION OF NUMERICAL AND NOMINAL DISTANCE — 410

ASSIGN SIMILARITY SCORE USING DISTANCE OR PROBABILITY VALUES — 412

OUTPUT TOP K SUCCESSOR BY SCORE — 414

**FIG. 4A**

416 METRIC LEARNING

YES ──→ GO TO STEP 422

NO

↓

LEARN CLASSIFIER USING PAST DATA ── 418

↓

COMPUTE ACTUAL SUCCESSOR PROBABILITY OF ALL PLAUSIBLE SUCCESSORS ── 420

↓

GO TO STEP 412

**FIG. 4B**

LEARN WEIGHT OF ATTRIBUTES USING METRIC LEARNING TECHNIQUES ── 422

↓

COMPUTE DISTANCE BY APPLYING ATTRIBUTES WEIGHT ── 424

↓

GO TO STEP 412

**FIG. 4C**

Europäisches
Patentamt

European
Patent Office

Office européen
des brevets

# EUROPEAN SEARCH REPORT

Application Number

EP 16 15 9294

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, is directed to the computer implementation of a non-technical business method as such, the latter being excluded from patentability under Art. 52(2) and (3) EPC.The information technology employed as an enabler for carrying out said processes, namely a general-purpose computer, is so well-known that its existence at the relevant date cannot reasonably be disputed.The claimed technical features, which amount to said general-purpose computer, is therefore considered to be part of the notorious knowledge, for which no documentary evidence is deemed necessary (see Guidelines for Examination in the European Patent Office, B-VIII, 2.2.1).  ----- | | INV.<br>G06Q10/10 |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 17 January 2017 | Reino, Bernardo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 4635MUM2015